# EUROPÄISCHE PATENTSCHRIFT

(11) **EP 3 118 575 B1**
(45) Veröffentlichungstag und Bekanntmachung des Hinweises auf die Patenterteilung: **19.09.2018**
(21) Anmeldenummer: 16174321.6
(22) Anmeldetag: 14.06.2016
(51) Int. Cl.: G01B 11/24, B26D 7/12, B24B 3/46, G01N 3/58

(54) **VORRICHTUNG ZUR ERMITTLUNG DES SCHÄRFEGRADS EINER MESSERSCHNEIDE**
DEVICE FOR DETERMINING THE SHARPNESS LEVEL OF A BLADE EDGE
DISPOSITIF DE DETERMINATION D'UN DEGRE D'AIGUISAGE D'UNE LAME DE COUTEAU

(30) Priorität: 16.07.2015 DE 102015213392
(43) Veröffentlichungstag der Anmeldung: 18.01.2017
(73) Patentinhaber: Weber Maschinenbau GmbH Breidenbach, 35236 Breidenbach (DE)
(72) Erfinder: Dr. BÖSSER, Hans Artur, 35236 Breidenbach (DE)
(74) Vertreter: Grünecker Patent- und Rechtsanwälte PartG mbB

(56) Entgegenhaltungen:
- US-A- 2 502 503
- US-A- 5 793 493
- US-A1- 2004 207 857
- US-A1- 2009 255 418
- US-B1- 8 915 766

## Beschreibung

Die vorliegende Erfindung betrifft eine Vorrichtung zur Ermittlung des Schärfegrads einer Schneide eines Schneidmessers einer Lebensmittelaufschneidemaschine, wobei es sich bei dem Schneidmesser insbesondere um einen Kreis- oder Sichelmesser handelt. Die Erfindung betrifft weiterhin eine Lebensmittelaufschneidemaschine oder eine Messerschleifmaschine, die die vorgenannte Messerschärfegradermittlungsvorrichtung umfasst. Schließlich betrifft die Erfindung noch ein Verfahren zur Ermittlung des Schärfegrads einer Schneide eines Schneidmessers.

Aus der DE 10 2011 103 418 A1 und der DE 10 2012 005 566 A1 ist es bekannt, im Rahmen eines Schleifvorgangs, den Schneidenverlauf von Schneidmessern unter Verwendung einer Gabellichtschranke oder einer Kamera mit Bildauswertung zu bestimmen. Die DE 10 2005 013 363 A1 offenbart den Einsatz einer Abtastrolle zur Erfassung der Messerkontur über den Drehwinkel.

Die US 5,793,493 A, US 8,915,766 B1, US 2004/0207857 A1 und US 2,502,503 A offenbaren optische Schärfe- bzw. Schneidenzustandsmessvorrichtungen. Die US 2009/255418 A1 offenbart einen Lebensmittelproduktslicer mit einem rotierenden Schneidmesser, der eine Schärfvorrichtung umfasst.

Für Lebensmittelaufschneidemaschinen, insbesondere für Hochleistungsslicer, kommen Kreis- und Sichelmesser zum Einsatz. Bei den üblichen, relativ hohen Drehzahlen sind für saubere Schnitte unter anderem die Schneide sowie deren Geometrie in Abstimmung auf das aufzuschneidende Lebensmittelprodukt von entscheidender Bedeutung. Bei den aufzuschneidenden Lebensmittelprodukten handelt es sich insbesondere um Lebensmittelriegel, beispielsweise Wurst-, Käse- oder Schinkenstangen, oder natürlich geformte Lebensmittellaibe, beispielsweise Käse- oder Schinkenlaibe. Die Lebensmittelprodukte werden zu Lebensmittelportionen aufgeschnitten, die aus gestapelten, geschindelten oder andersweitig angeordneten Lebensmittelscheiben bestehen, zwischen denen optional Papierblätter oder Plastikfolien als Trennmittel angeordnet sein können, die durch einen Interleaver bereitgestellt werden.

Der Erfindung liegt die Aufgabe zu Grunde, eine Vorrichtung und ein Verfahren zur Ermittlung des Schärfegrads eines Schneidmessers bereitzustellen, mit denen die Bestimmung des Schärfegrads von Schneidmessern zügig, präzise und betriebssicher durchgeführt werden kann.

Dies wird durch eine Vorrichtung gemäß Anspruch 1 gelöst, wobei die Vorrichtung eine Lichtquelle und eine Lichterfassungsvorrichtung aufweist, wobei letztere ausgelegt ist, an der Schneidmesserschneide reflektiertes Licht der Lichtquelle zu erfassen. Erfindungsgemäß ist eine Auswerteeinheit vorgesehen, die ausgelegt ist, aus dem Signal der Lichterfassungsvorrichtung den Schärfegrad des Schneidmessers zu ermitteln, insbesondere zu berechnen. Der Schärfegrad ist dabei ein Kennwert oder ein Satz von Messerzustandsparametern (wie z.B. Schneidengeometrie, Schneidenbreite und/oder Schneidenwinkel, usw.), der die Schärfe des Schneidmessers an einer bestimmte Position der Schneide wiedergibt. Der Schärfegrad kann auch für mehrere Positionen entlang der Schneide ermittelt werden. Erfindungsgemäß ist weiterhin eine Messvorrichtung in Form einer Lichtschranke vorgesehen, mit der die Position der Schneide des Schneidmessers bezüglich der Messerschärfegradermittlungsvorrichtung in radialer Richtung des Schneidmessers bestimmbar ist.

Der Einsatz von Licht zum Messen ermöglicht eine präzise Erfassung der Geometrie der Schneide, die einen Rückschluss auf den Schärfegrad der Schneide erlaubt. Je schmäler und damit schärfer die Schneide ist, umso weniger Licht wird reflektiert.

Um einen Referenzwert für den Schärfegrad zu bestimmen, kann zunächst ein nicht beim Schneiden benutzter Teil der Schneide des Schneidmessers mit der Messerschärfegradermittlungsvorrichtung vermessen werden. Alternativ oder ergänzend können auch Messer-Daten aus einem RFID-Chip des Schneidmessers ausgelesen werden. Weiterhin kann als Alternative eine Referenzschneide vorgesehen sein, welche zum Beispiel so angeordnet ist, dass sie von der Messerschärfegradermittlungsvorrichtung in einer Parkposition vermessen werden kann. Der ermittelte Schärfegrad der Referenzschneide bildet einen Referenzwert für den ermittelten Schärfegrad des Schneidmessers.

Der RFID-Chip kann im oder am Schneidmesser vorgesehen sein, und ermöglicht es, dass Daten darin abgelegt und/oder daraus ausgelesen werden können. Insbesondere können die Daten Messerzustandsdaten, Messerschleifmaschineneinstellungen und gegebenenfalls auch Betriebsparameter der Lebensmittelaufschneidemaschine betreffen, um ein genaues Zusammenspiel zwischen dem Schneidmesser, der Messerschleifmaschine und der Lebensmittelaufschneidemaschine sicherzustellen. Weiterhin kann dadurch auch die Daten-Historie berücksichtigt werden, d.h. Informationen zu vorausgehenden Schleifvorgängen, beispielsweise deren Anzahl und oder Eigenschaften, können abgespeichert und ausgelesen werden. Bei der Berechnung des Schärfegrads und insbesondere von dessen Mittelwert können somit auch die vorangegangenen Schleifvorgänge berücksichtigt werden. Bei dem Schneidmesser handelt es sich insbesondere um ein Rotationsmesser, bevorzugt um ein Kreismesser oder Sichelmesser.

Die Auswerteeinheit kann ausgelegt sein, Ausbrüche, d.h. diskontinuierliche bzw. irreguläre Beschädigungen der Schneide zu erkennen. Über die Bilderkennung in der Auswerteeinheit werden die Beschädigungen sicher erfasst, die Summe und Art der Beschädigungen kann optional ausgewertet werden. Derartige Beschädigungen sind beispielsweise Ausbrüche oder Risse.

Erfindungsgemäß kann bei Schneidmessern, die oft einen Durchmesser von 0,3 m (Meter) bis 0,5 m und einen Umfang von 1 m bis 2 m haben, der Schärfegrad der Schneide präzise erfasst werden. Die Schneide liegt oft in einem Messfeld von 1 mm bis 2 mm (Millimeter) und ihre Strukturen im Bereich der Größenordnung Mikrometer.

Bei der Lichterfassungsvorrichtung kann es sich insbesondere um eine Fotodiode handeln. Je weniger Licht an der Schneide reflektiert wird, umso geringer ist das Signal der Fotodiode.

Vorteilhafterweise ist die Lichtquelle eine Ringlichtquelle, die insbesondere koaxial bezüglich der Lichterfassungsvorrichtung angeordnet ist. Insbesondere ist die Ringlichtquelle koaxial zum einem Objektiv der Lichterfassungsvorrichtung angeordnet. Der Winkelbereich der Ringlichtquelle liegt etwa im Halbwinkel-Bereich 0° bis 25° bezogen auf die optische Achse. Somit kann eine vorteilhafte Ausleuchtung der Schneide des Schneidmessers erfolgen, und die Reflexion direkt über das Objektiv erfasst werden. Insbesondere ist im Objektiv eine Blende vorgesehen. Zudem kann auch zwischen der Lichtquelle, insbesondere der Ringlichtquelle, und der Schneide des Schneidmessers eine Blende vorgesehen sein.

Die optische Achsen der Lichtquelle, insbesondere der Ringlichtquelle, und der Lichterfassungsvorrichtung, insbesondere des Objektivs, liegen bevorzugt in der Messer- bzw. Schneidenebene.

Auch bei anderen Lichtquellen als Ringlichtquellen und anderen optischen Bauelementen als Objektiven, kann eine koaxiale Anordnung von Lichtquelle und Lichterfassungsvorrichtung vorgesehen sein.

In einer bevorzugten Ausführungsform wird die Lichtquelle durch wenigstens eine Leuchtdiode (LED), insbesondere mit kleinem Leuchtfleck, gebildet. Ein kleiner Leuchtfleck kann durch ein geeignetes optisches Element zur gerichteten Bündelung des Lichts, wie z.B. eine Linse, ermöglicht werden. Ein kleiner Leuchtfleck hat insbesondere einen Durchmesser von weniger als 10 mm (Millimeter), vorteilhafterweise von weniger als 5 mm, und noch vorteilhafterweise von weniger als 1,5 mm, wenn die Lichtquelle im Arbeitsabstand zur Schneide ist. Dies ermöglicht eine effiziente und helle Beleuchtung, die auch bei variierendem Abstand der Lichtquelle zur Schneide leistungsfähig ist.

Insbesondere stellt die Lichtquelle gebündeltes Licht bereit. Dies kann beispielsweise durch eine optische Bündelung über Linsen erfolgen.

Vorteilhafterweise kann die Lichtquelle Laserstrahlung emittieren, und dafür insbesondere wenigstens eine Laserdiode umfassen. Insbesondere wird eine monochromatische Laserdiode eingesetzt, deren emittiertes Laserlicht eine hohe Kohärenz aufweist. Es können aber auch nicht-monochromatische Laserdioden eingesetzt werden, die, ähnlich wie LEDs, Licht in einem gewissen Wellenlängenbereich erzeugen. Der Laserstrahl der eingesetzten Laserdiode ist im Durchmesser konstant, wodurch, unabhängig vom Abstand, eine genaue Abgrenzung des Messbereichs ermöglicht wird. Dies ermöglicht eine effiziente und helle Beleuchtung, die auch bei variierendem Abstand der Lichtquelle zur Schneide leistungsfähig ist.

Insbesondere kann eine gepulste Laserdiode als Lichtquelle zum Einsatz kommen. Dies ist vorteilhaft, da Umgebungseinflüsse ausgefiltert werden können. Insbesondere kann dies durch Synchronisierung des Erfassungszeitraums der Lichterfassungsvorrichtung mit den Laserpulsen erfolgen.

In einer Ausführungsform können auch mehrere Laserdioden zum Einsatz kommen, bzw. die Laserdioden können durch weitere Bauteile, beispielsweise LEDs, ergänzt werden.

Vorteilhafterweise wird die von der Lichtquelle ausgestrahlte Lichtintensität normiert, insbesondere wird deren Helligkeit geregelt. Dies ermöglicht ein Ausblenden von Nebenlichtquellen.

In einer bevorzugten Ausführungsform ist die Lichterfassungsvorrichtung ausgelegt, die Reflexionserfassung quantitativ und indirekt vorzunehmen.

Vorteilhafterweise wird die Lichterfassungseinrichtung durch mindestens ein lichtempfindliches Halbleiterelement gebildet. Dabei handelt es sich insbesondere um einen lichtempfindlichen Detektor, wie zum Beispiel eine Fotozelle bzw. Fotodiode. Insbesondere ist das lichtempfindliche Halbleiterelement ausgelegt, nur eine bestimmte Wellenlänge bzw. einen bestimmten engen Wellenlängenbereich zur Auswertung zu erfassen. Damit kann der Einfluss von Streulicht minimiert werden. Bei der Lichterfassungseinrichtung können auch optische Filter zum Einsatz kommen, um die Erfassung von lediglich einem bestimmten Wellenlängenbereich durch die Lichterfassungseinrichtung zu gewährleisten.

In einer Ausführungsform weist die Lichterfassungsvorrichtung ein optisches Bauelement auf, das insbesondere wenigstens eine Linse und/oder eine Blende umfasst, und eine Eingangsoptik bildet. Weiterhin, weist die Lichterfassungsvorrichtung einen Sensor auf, der durch eine Fotodiode oder einen CCD-Sensor, insbesondere einen ein- oder zweidimensionalen CCD-Array-Sensor, gebildet wird.

Vorteilhafterweise ist die Lichterfassungsvorrichtung bzw. deren optische Bauelemente, näher an der Schneide angeordnet, als die Lichtquelle. Insbesondere wird der Abstand zwischen Schneide und Lichterfassungsvorrichtung konstant gehalten. Vorteilhaft sind Abstände zwischen 5 mm (Millimeter) und 70 mm, in einer bevorzugten Ausführungsform ist der Abstand zwischen 35 mm und 56 mm, in einer anderen Ausführungsform ist der Abstand ca. 10 mm. Eine möglichst nahe Anordnung an der Schneide ist prinzipiell vorteilhaft für die Erfassung des reflektierten Lichts. Sollte ein größerer Abstand gewählt werden, wird ein vergleichsweise größerer Sensor in der Lichterfassungsvorrichtung benötigt.

Insbesondere werden auch die Rauheit des Schneidmessers im Bereich der Schneide und die erwartungsgemäß reflektierte Lichtmenge bei der Auswahl der Art der Lichtquelle, der Sensorgröße der Lichterfassungsvorrichtung, und dem Abstand der Lichtquelle bzw. der Lichterfassungsvorrichtung von der Schneide berücksichtigt.

Die Auswerteeinheit berücksichtigt verschiedene Parameter der Lichterfassungsvorrichtung, wie zum Beispiel Auflösung, Pixelgröße, Objektfeldgröße, Tiefenschärfe und/oder Framerate (Bilder pro Sekunde). Weiterhin kann die Auswerteeinheit auch die Messergeometrie berücksichtigen, die entweder vor der Ermittlung des Schärfegrads durch die Lichterfassungsvorrichtung oder eine gesonderte Messvorrichtung bestimmt wird, oder aus einem Datenspeicher, beispielsweise aus einer Datenbank oder einem RFID-Chip im Schneidmesser, ausgelesen wird.

Vorteilhafterweise kann die Auswerteeinheit die Art und/oder Intensität der Beleuchtung, und die beleuchtungsseitige Fokussierung der Lichtquelle steuern. Weiterhin kann die Auswerteeinheit vorteilhaftweise die abbildungsseitige Fokussierung, und die Abbildung, d.h. die Vergrößerung und Auflösung, steuern. Insbesondere ist es möglich, Fremdreflexe durch geeignete Optik und/oder Bildverarbeitung zu unterdrücken. Damit kann eine vorteilhafte Bilderkennung in einer eigentlich für derartige optische Bauteile nicht geeigneten Umgebung, trotz Schmutz, Feuchtigkeit und Schleifresten, ermöglicht werden.

Die Winkelanordnung zwischen Lichtquelle, Schneide und Lichterfassungsvorrichtung ist möglichst auf die Schneide abgestimmt und mit dieser korrespondierend. D.h. in Abhängigkeit von der Schneidengeometrie wird ein bestimmter Winkel vorgegeben, in dem die Lichtquelle und der Empfänger bezüglich der Messerebene angeordnet werden. Dies kann automatisch auf Basis von in einer Datenbank der Auswerteeinheit hinterlegten Werten erfolgen. Die Werte können alternativ oder ergänzend auch in einem Chip, insbesondere in einem RFID-Chip, im Schneidmesser hinterlegt sein. Zudem kann die Datenbank bzw. der RFID-Chip Informationen zu den jeweiligen, vorteilhaften Abständen und/oder Winkeln der Lichtquelle und der Lichterfassungsvorrichtung bezüglich der Schneide enthalten, die dann automatisch eingestellt werden können. Wenn das Schneidmesser einen RFID-Chip aufweist, ist die Auswerteeinheit mit einem RFID-Lesegerät verbunden, das es der Auswerteeinheit ermöglicht, den RFID-Chip auszulesen und gegebenenfalls zu beschreiben.

Insbesondere ist die Lichtquelle auf der einen Seite der Messerebene angeordnet, und die Lichterfassungsvorrichtung ist auf der anderen Seite der Messerebene angeordnet. Dies ermöglicht eine vorteilhafte Erfassung des reflektierten Streulichts.

In einer Ausführungsform ist die Lichterfassungseinrichtung eine Digitalkamera mit einem Objektiv. Das Objektiv ist vorteilhafterweise in einem Abstand von 2 cm (Zentimeter) bis 10 cm von der Schneide angeordnet, bevorzugt in einem Abstand zwischen 35 mm (Millimeter) und 56 mm.

Die Digitalkamera kann als sogenannte Smart-Kamera ausgeführt sein, sodass die Software und Elektronik in der Kamera Bearbeitungsschritte übernehmen können, wie zum Beispiel die Steuerung der Fokussierung oder Teile der digitalen Bildauswertung.

Vorteilhafterweise ist das Objektiv ein telezentrisches Objektiv. Dabei ist das Objektiv insbesondere nur auf seiner Objektseite telezentrisch. Ein telezentrisches Objektiv ermöglicht im Vergleich zu anderen Objektiven einen größeren Tiefenschärfebereich. Dabei ändert sich der Abbildungsmaßstab nicht, sondern bleibt über den Tiefenschärfe-Bereich konstant, da nur parallele Strahlen abgebildet werden. Ein telezentrisches Objektiv ist vorteilhaft zur Ermittlung der Schärfeebene, welche der Messebene entspricht, in der die Spitze der Schneide liegt.

Vorteilhafterweise kann eine Abstandsänderung zwischen Schneidmesser und Optik, die beim Bewegen bzw. Rotieren des Messers während des Schneidvorgangs auftreten kann, durch Verfahren der Optik und/oder durch Fokussieren kompensiert werden. Damit kann die Abbildung der Schneide durchgehend scharf gestellt bleiben, sodass eine Auswertung möglich ist.

Insbesondere ist eine Fein-Fokussiereinrichtung vorgesehen, die eine Einstellung auf die Messebene ermöglicht, also das Fokussieren auf die Spitze der Schneide. Die FeinFokussierung erfolgt bevorzugt durch Verstellen der Brennweite des Objektivs. Vorteilhafterweise weist die Fein-Fokussiereinrichtung eine Auswerteeinheit auf, die eine Hell-/Dunkel-Auswertung von Bildbereichen vornimmt. Dabei wird durch die Änderung des Kontrasts erkannt, wann eine Bildebene scharf gestellt ist. Dies ist insbesondere der Fall, wenn eine deutliche Abgrenzung von hellen zu dunklen Bereichen vorliegt. Insbesondere kann dabei ein Sensor zur Objekterkennung zum Einsatz kommen, vorzugsweise wird aber das in der Lichterfassungsvorrichtung erfasste Bild ausgewertet.

Vorteilhafterweise wird durch die Lichterfassungseinrichtung nur Licht in einem bestimmten Wellenlängenbereich oder mit einer bestimmten Wellenlänge erfasst. Dies kann durch einen Filter oder durch ein geeignetes Halbleiterelement erreicht werden.

Die Schneidenlänge kann entlang des Umfangs vor der Bestimmung des Schärfegrads ermittelt werden, sodass dann die Schneidenlänge gezielt abgefahren werden kann, und stichprobenartig kritische Messpunkte angefahren werden können und der Schärfegrad an diesem Messpunkten bestimmt werden kann.

Erfindungsgemäß ist eine Messvorrichtung in Form einer Lichtschranke vorgesehen, mit der die Position der Schneidkante des Schneidmessers bezüglich der Vorrichtung in axialer und radialer Richtung bestimmt werden kann. Insbesondere kommt eine Gabellichtschranke zum Einsatz. Die Messvorrichtung dient als Positionierhilfe, und ermöglicht die Lage des Messers zu bestimmen, sowohl in axialer als auch in radialer Richtung. Damit kann die Lichtquelle und die Lichterfassungsvorrichtung optimal bezüglich des Schneidmessers positioniert werden. Die Messvorrichtung ermöglicht insbesondere die Messerkontur zu erfassen. Danach kann die Messvorrichtung gegebenenfalls in eine geschützte Parkposition bewegt werden. Die Messerkontur wird gespeichert, und die Vorrichtung kann die Lichtquelle und Lichterfassungsvorrichtung so positionieren und bewegen, dass der Schärfegrad der Schneide entlang der gesamten Messerkontur bestimmt werden kann.

Die Lichtquelle kann einen beweglichen Spiegel aufweisen oder mit einem beweglichen Spiegel korrespondieren, um die Richtung des ausgestrahlten Lichts vorzugeben. Ein derartiger Spiegel ermöglicht eine einfache Ausrichtung des Lichtstrahls. Insbesondere kann die Lichtquelle mit einem beweglichen Spiegel versehen sein, oder ein beweglicher Spiegel zusätzlich zur Lichtquelle vorgesehen sein, mit dem das Licht der Lichtquelle auf die Schneide gelenkt werden kann. Dabei ist die Bewegung des Spiegels durch die Auswerteeinheit steuerbar. Der Einsatz eines Spiegels bietet sich insbesondere an, wenn der Schärfegrad von Schneidmessern mit entlang ihres Umfangs veränderlichem Radius, wie beispielsweise Sichelmesser, ermittelt wird. Der bewegliche Spiegel ermöglicht, dass die beleuchtete Länge der Schneide immer konstant gehalten werden kann. Damit kann eine gleichbleibende, exakte Blende für die Lichtquelle und/oder die Lichterfassungsvorrichtung vorgesehen werden.

In anderen Ausführungsformen kann eine automatische Verstellung der Ausrichtung der Lichtquelle durch die Auswerteeinheit vorgesehen sein.

Vorteilhafterweise kommt in der Lichtquelle eine Laserdiode zum Einsatz. Insbesondere hat Laserstrahl einer solchen Laserdiode ein Durchmesser von 0,2 mm bis 3 mm, bevorzugt von ungefähr 1 mm.

In Kombination mit dem Einsatz einer Lichtquelle mit Laserdiode und Mikrospiegel bietet sich insbesondere eine Lichterfassungsvorrichtung an, in der eine Fotodiode vorgesehen ist. Somit kann bei der Rotation des Messers die Änderung der Reflexion des Lichtstrahls an der Schneide über den Fotodioden-Strom erfasst werden. Eine Zustandsänderung, insbesondere eine Erhöhung des Fotodioden-Stroms, signalisiert einen geringeren Schärfegrad und damit eine erhöhte Abnutzung des Messers.

Insbesondere kann die Lichterfassungsvorrichtung mit einer Klappe versehen sein, die automatisch zu den Zeitpunkten geschlossen werden kann, zu denen keine Ermittlung des Schärfegrads erfolgt. Damit kann die Lichterfassungsvorrichtung vor Verschmutzung und Beschädigung geschützt werden.

Vorteilhafterweise ist die Lichtquelle in einem ersten Winkel α und die Lichterfassungseinrichtung in einem zweiten Winkel β zur Messerebene des Schneidmessers angeordnet. Insbesondere ist die Lichtquelle auf der Rückseite der Messerebene, und die Lichterfassungseinrichtung auf der Vorderseite der Messerebene angeordnet. Der erste Winkel α ist vorteilhaftweise größer als der Schneidenwinkel der Schneide des Schneidmessers. Ziel ist es, dass das Licht auf die Spitze der Schneide, d.h. die Schneidkante, auftrifft. Die ersten und zweiten Winkel α, β sind jeweils größer 0°, insbesondere größer als 5°.

Erfindungsgemäß werden vornehmlich Reflexionen von der Spitze der Schneide ausgewertet, denn der Verschleiß der Spitze der Schneide lässt die Spitze breiter werden. Die Erfassung dieser Verbreiterung ist relevant für die Bestimmung des Schärfegrads.

In einer Ausführungsform ist die Lichtquelle in einem dritten Winkel ϕ und die Lichterfassungseinrichtung in einem vierten Winkel ϑ bezüglich der durch die Radialrichtung und Axialrichtung im Messpunkt an der Schneide des Messers definierten Ebene angeordnet. Die dritten und vierten Winkel ϕ, ϑ sind jeweils größer 0°, insbesondere größer als 5°.

Die Erfindung stellt weiterhin eine Lebensmittelaufschneidemaschine bereit, die eine erfindungsgemäße Messerschärfegradermittlungsvorrichtung und ein Schneidmesser aufweist, wobei die Messerschärfegradermittlungsvorrichtung so angeordnet ist, dass der Schärfegrad eines Schneidmessers erfasst werden kann, während das Schneidmesser auf einem Schneidkopf der Lebensmittelaufschneidemaschine montiert ist. Dies ermöglicht, dass der Schärfegrad des Schneidmessers durchgehend überwacht oder punktuell kontrolliert werden kann, ohne dass das Schneidmesser aus der Lebensmittelaufschneidemaschine entfernt werden muss.

Insbesondere umfasst die Lebensmittelaufschneidemaschine in Ergänzung zur Messerschärfegradermittlungsvorrichtung eine Messerschleifeinrichtung, die ausgelegt ist, das in der Lebensmittelaufschneidemaschine montierte Schneidmesser nachzuschleifen, insbesondere unter Auswertung des von der Messerschärfegradermittlungsvorrichtung ermittelten Schärfegrads des Schneidmessers. Damit kann direkt in der Lebensmittelaufschneidemaschine das Nachschleifen des Schneidmessers erfolgen; das Schneidmesser muss dafür nicht aus der Lebensmittelaufschneidemaschine ausgebaut werden.

Die Messerschärfegradermittlungsvorrichtung kann somit in einer Lebensmittelaufschneidemaschine zum Einsatz kommen, um dort während des Aufschneidebetriebs, vorzugsweise in Betriebsunterbrechungen wie Belade-, Reinigungs- und Maschinen-Einrichtungspausen, den Schärfegrad der Schneide des montierten Schneidmessers zu überwachen. Die Messerschärfegradermittlungsvorrichtung ist in dieser Ausführungsform vorteilhafterweise direkt in die Lebensmittelaufschneidemaschine integriert, wobei die Messerschärfegradermittlungsvorrichtung während des Aufschnittbetriebs vorteilhafterweise weggeklappt oder abgedeckt werden kann, um eine Verschmutzung zu vermeiden. Zusätzlich zur Messerschärfegradermittlungsvorrichtung kann auch eine integrierte Schleifeinrichtung in der Lebensmittelaufschneidemaschine vorgesehen sein, die ein Nachschleifen des Schneidmessers ermöglicht. Es ist aber auch möglich, die Messerschärfegradermittlungsvorrichtung ohne Schleifenrichtung vorzusehen. Sobald erkannt wird, dass das Schneidmesser nachgeschliffen werden muss, wird es aus der Lebensmittelaufschneidemaschine entnommen und kann dann in einer Messerschleifmaschine nachgeschliffen werden.

Zudem stellt die Erfindung eine Messerschleifmaschine bereit, umfassend eine erfindungsgemäße Messerschärfegradermittlungsvorrichtung, die so angeordnet ist, dass der Schärfegrad eines Schneidmessers erfasst werden kann, während das Schneidmesser an einer Messeraufnahme in der Messerschleifmaschine montiert ist. Somit kann während des Nachschleifens der Schärfegrad des Schneidmessers bestimmt werden, ohne dass das Schneidmesser aus der Messerschleifmaschine entnommen werden muss. Durch den Einsatz der Messerschärfegradermittlungsvorrichtung während des Schleifens des Schneidmessers kann eine regelmäßige bzw. durchgehende Überprüfung des Schärfergebnisses während des Schleifvorgangs erfolgen, und somit unnötiger Materialabtrag vermieden werden.

Insbesondere ist die Messerschleifmaschine ausgelegt, auf der Basis des von der Messerschärfegradermittlungsvorrichtung ermittelten Schärfegrads den Schleifvorgang zu steuern. Damit wird ein geregelter Schleifvorgang implementiert, der ein effizientes Schleifen des Messers ermöglicht.

Mit der Erfindung können die Betreiber von Lebensmittelaufschneidemaschinen und/oder Messerschleifmaschinen bei der Vorhersage unterstützt werden, wann ein Schneidmesser der Überarbeitung bedarf, bzw. wie lange ein Schneidmesser qualitätssicher, also mit den gewünschten Schneideigenschaften, benutzt werden kann. Weiterhin kann ein erhöhter Verschleiß des Schneidmessers frühzeitig erfasst werden. Dies ermöglicht eine zeitnahe Behebung der Ursache des Verschleißes. Zudem kann vermieden werden, dass Schneidmesser zu frühzeitig nachgeschliffen werden, was zu einem erhöhten Verschleiß führen würde.

In einer bevorzugten Ausführungsform ist die Messerschärfegradermittlungsvorrichtung bezüglich des Schneidmessers in ihrer Position und/oder Ausrichtung verstellbar. Vorteilhaftweise kann die Messerschärfegradermittlungsvorrichtung während des Schneidbetriebs bzw. des Schleifbetriebs vom Schneidmesser weg bewegt werden bzw. durch ein Abdeckungselement, wie beispielsweise eine Klappe, Tür oder einen Schieber, abgedeckt werden, sodass die Messerschärfegradermittlungsvorrichtung nicht verschmutzt oder beschädigt wird. Zudem ermöglicht die Verstellbarkeit der Messerschärfegradermittlungsvorrichtung, dass die Messerschärfegradermittlungsvorrichtung der Kontur des Schneidmessers nachgeführt werden kann. Beispielsweise kann die Messerschärfegradermittlungsvorrichtung linear in Radialrichtung bezüglich des Schneidmessers verstellt werden. Somit kann auch bei Sichelmessern der Schärfegrad der Schneide entlang deren gesamter Erstreckung erfasst werden.

Das Schneidmesser und/oder die Lichtquelle und Lichterfassungsvorrichtung sind beweglich gelagert, sodass sie optimal positioniert werden können. Die Positionierung der Messerschärfegradermittlungsvorrichtung in einer Lebensmittelaufschneidemaschine kann insbesondere während eines Leerschnitts erfolgen.

Vorteilhafterweise ist die Lebensmittelaufschneidemaschine bzw. die Messerschleifmaschine ausgelegt, den Schärfegrad an verschiedenen Messpunkten in Abhängigkeit eines Drehwinkels des Schneidmessers zu bestimmen, indem das Schneidmesser und die Messerschärfegradermittlungsvorrichtung relativ zueinander um die Rotationsachse des Messers verdreht werden. Dies kann beispielsweise dadurch erreicht werden, dass der Schneidkopf bzw. die Messeraufnahme mit dem Schneidmesser rotiert werden, während die Messerschärfegradermittlungsvorrichtung stationär verbleibt oder lediglich in Radialrichtung des Schneidmessers verstellt wird.

Erfindungsgemäß wird weiterhin ein Verfahren gemäß Anspruch 16 zur Ermittlung des Schärfegrads einer Schneide eines Schneidmessers, insbesondere eines Rotationsmessers, beispielsweise eines Kreis- oder Sichelmessers, bereitgestellt, bei dem die Position der Schneide des Schneidmessers in radialer Richtung mit einer Messvorrichtung in Form einer Lichtschranke bestimmt wird, Licht auf die Schneide ausgestrahlt wird, dann die Reflexion des Lichts von der Schneide gemessen wird, und schließlich durch Auswerten der Messung der Reflexion, insbesondere in einer elektronischen Auswerteeinheit, der Schärfegrad der Schneide ermittelt wird.

Insbesondere ermöglicht die Reflexion des Lichtes von der Schneidkante eine Bestimmung von deren Struktur bzw. Fläche, wodurch der Schärfegrad ermittelt werden kann. Je spitzer die Schneidkante ist, das heißt je geringer ihre Fläche ist, umso höher ist beispielsweise ein als Kennwert definierter Schärfegrad.

Der ermittelte Schärfegrad kann als Eingangssignal der Steuerung eines Schleifvorganges des Schneidmessers verwendet wird. Somit ist ein geregeltes Schleifen des Schneidmessers möglich. Insbesondere kann auf Basis des ermittelten Schärfegrads durch die Steuerung entschieden werden, ob der Schleifvorgang abgeschlossen ist.

Durch das vorgenannten Ausstrahlen von Licht und das Messen der Reflexion des Lichts von der Schneide kann die Verzahnungsart und/oder die Verzahnungsteilung des Schneidmessers bestimmt werden. Dies ermöglicht insbesondere einen Schleifvorgang an die Verzahnung anzupassen.

Durch das vorgenannten Ausstrahlen von Licht und das Messen der Reflexion des Lichts von der Schneide kann der Schneidenwinkel auf einer oder beiden Seiten des Schneidmessers bestimmt werden. Dies ermöglicht eine genauere Bestimmung der Schneidengeometrie, die Teil des Schärfegrads sein kann, und/oder eine Anpassung eines Schleifvorgangs in Abhängigkeit des vorliegenden Schneidenwinkels.

Durch das vorgenannten Ausstrahlen von Licht und das Messen der Reflexion des Lichts von der Schneide können Beschädigungen, z.B. Ausbrüche, in der Schneide bestimmt werden, insbesondere deren Abmessungen in Lauf- bzw. Umfangsrichtung des Schneidmessers und deren Tiefe in radialer Richtung des Schneidmessers. Damit können der Grad, die Art und die Lage von Beschädigungen bestimmt werden. Auf dieser Basis kann durch eine Auswerteeinheit entschieden werden, ob das Schneidmesser weiterbenutzt werden kann, und/oder ein Schleifvorgang zur Beseitigung der Beschädigungen durchgeführt werden. Die Erfindung wird im Folgenden anhand von beispielhaften Ausführungsformen mit Bezug auf die Figuren erläutert.
Figur 1 zeigt eine Teilansicht der Geometrie eines Schneidmessers in einer seitlichen Schnittansicht;
Figur 2 zeigt eine schematische Seitenansicht einer Messerschärfegradermittlungsvorrichtung;
Figur 3 zeigt eine schematische Seitenansicht einer ersten Ausführungsform einer erfindungsgemäßen Messerschärfegradermittlungsvorrichtung;
Figur 4 zeigt eine schematische Seitenansicht einer zweiten Ausführungsform einer erfindungsgemäßen Messerschärfegradermittlungsvorrichtung;
Figur 5 zeigt eine schematische Seitenansicht einer Ausführungsform einer erfindungsgemäßen Lebensmittelaufschneidemaschine; und
Figur 6 zeigt eine schematische Vorderansicht einer Ausführungsform einer erfindungsgemäßen Messerschleifmaschine.

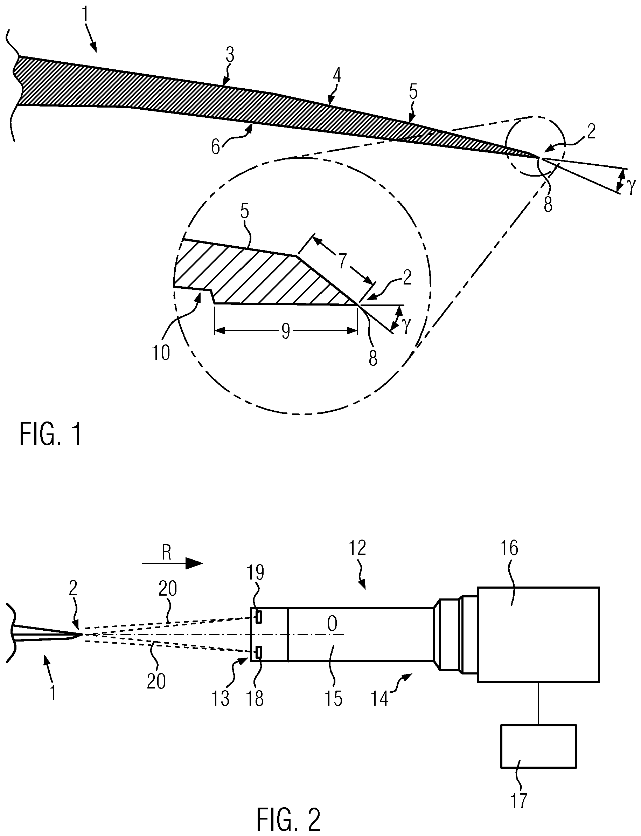

In Figur 1 ist die Geometrie eines Schneidmessers 1 hin zur Schneide 2 dargestellt. Bei dem Schneidmesser 1 kann es sich um ein Kreismesser oder um ein Sichelmesser handeln. Der Bereich um die Schneide 2 ist in einer vergrößerten Ansicht dargestellt. Die Schneide 2 befindet sich am Außenumfang des Schneidmessers 1.

Auf der Vorderseite des Schneidmessers 1, welche von der Messeraufnahme im Zentrum des Schneidmessers 1 weg zeigt, befindet sich mindestens ein Nebenwinkelbereich. In Figur 1 weist die Vorderseite des Schneidmessers einen Bereich mit einem ersten Nebenwinkelbereich 3 und einen zweiten Nebenwinkelbereich 4 auf. Zwischen dem zweiten Nebenwinkelbereich 4 und der Schneide 2 ist ein Hohlschliff 5 vorgesehen. Auf der Rückseite des Schneidmessers 1 ist ebenfalls ein Hohlschliff 6 vorgesehen.

Wie in der vergrößerten Ansicht gesehen werden kann, weist die Schneide 2 an der Messervorderseite einen vorderen geschliffenen Schneidenbereich 7 zwischen dem Hohlschliff 5 und der Schneidkante 8 auf. Die Schneidenlänge des Schneidenbereichs 7 ist im Verhältnis relativ gering und beträgt beispielsweise nur 1 mm bis 2 mm.

Auf der Rückseite des Schneidmessers 1 ist im Bereich der Schneide 2 ein geschliffener Schneidenbereich 9 vorgesehen. Daran radial innen angrenzend weist das Schneidmessers 1 eine Freifläche 10 auf. Der Hohlschliff 6 beginnt radial innenliegend nach der Freifläche 10. Beim Schneidvorgang tritt eine geschliffene Schneide 2 somit zuerst mit der Schneidkante 8 in Kontakt mit dem zu schneidenden Lebensmittelprodukt. Der geschliffene, hintere Schneidenbereich 9 ist dem Lebensmittelprodukt zugewandt, der vordere Schneidenbereich 7 ist der gerade abgetrennten Lebensmittelscheibe zugewandt.

Sehr bedeutend und in starker Abhängigkeit vom aufzuschneidenden Produkt ist der Schneidwinkel γ, welcher meistens im Bereich von 19° bis 32° liegt.

Der Schärfegrad der Schneidkante 8 wird durch ihre Breite und durch gegebenenfalls vorliegende Beschädigungen definiert.

In Figur 2 ist eine Vorrichtung in Form der Messerschärfegradermittlungsvorrichtung 12 in Seitenansicht dargestellt.

Die Messerschärfegradermittlungsvorrichtung 12 ermöglicht es, den Schärfegrad einfach und genau zu bestimmen.

Eine stumpfe Schneidkante 8 weist beispielsweise eine Breite von 55-60 µm (Mikrometer) auf, während eine scharfe Schneidkante 8 eine Breite von nur 5-10 µm aufweist. Insbesondere kann die Messerschärfegradermittlungsvorrichtung 12 in Kombination mit Mess- und Positionssensoren sowie Bild- und Signalauswertung eingesetzt werden.

Es wird ermöglicht den Schärfegrad des Schneidmessers 1 genau zu erfassen, und somit ein Nachschleifen zu einem geeigneten Zeitpunkt zu veranlassen.

Die in Figur 2 gezeigte Messerschärfegradermittlungsvorrichtung 12 weist eine Lichtquelle 13 in Form einer Ringlichtquelle, auf und eine Lichterfassungsvorrichtung 14, mit einem telezentrischen Objektiv 15 und einer Digitalkamera 16. Weiterhin ist eine Auswerteeinheit 17 vorgesehen, die die von der Digitalkamera 16 erfassten Daten auswertet.

Die Ringlichtquelle 13 umfasst einen Ring von Leuchtdioden 18,19, die einen im wesentlich hohlkegelförmigen Lichtstrahl 20 erzeugen, der auf die Schneide 2 des Messers 1 gerichtet ist. Die Leuchtdioden 18,19 sind bevorzugt vorne am Objektiv 15 als durchgehende oder abgesetzte ringförmige Struktur vorgesehen. Alternativ können die Leuchtdioden 18, 19 der Ringlichtquelle 13 aber auch in einem Abstand zum Objektiv 15 vorgesehen sein.

Bei der Ermittlung des Schärfegrads der Schneide 2 wird der Lichtstrahl 20, wie in Figur 2 gezeigt, auf die Schneide 2 ausgerichtet. Die Schneide 2 und insbesondere die Schneidkante 8 reflektieren nun das Licht in Richtung des Objektivs 15. Je abgenutzter die Schneidkante 8 ist, umso flacher ist sie, und umso mehr Licht wird in Richtung des telezentrischen Objektivs 15 reflektiert. Das telezentrische Objektiv 15 ist so eingestellt, dass die Schneide 2 und insbesondere die Schneidkante 8 scharf gestellt werden. Somit wird ermöglicht, dass die Kamera 16 ein genaues Bild der Schneidkante 8 und Schneide 2 erfassen kann. Dieses Bild wird dann in der Auswerteeinheit 17 durch digitale Bildverarbeitung ausgewertet, wodurch der Schärfegrad der Schneide 2 bestimmt werden kann.

Insbesondere können das Schneidmesser 1 und/oder die Lichterfassungsvorrichtung 14 sowie die Lichtquelle 13 während des Ermittlungsvorgangs relativ zueinander bewegt werden. Vorteilhafterweise wird das Schneidmesser 1 um die Messerrotationsachse gedreht, sodass der Schärfegrad an mehreren Stellen der Schneide 2 gemessen werden kann. Somit kann an mehreren diskreten Messpunkten entlang der Erstreckung der Schneide 2 der lokale Schärfegrad bestimmt werden. Die Messerschärfegradermittlungsvorrichtung 12 ermöglicht die Bestimmung des lokalen Schärfegrads der Schneide 2 vornehmlich im Bereich von 0,01 mm bis 0,1 mm längs der Schneidenerstreckung in Umfangsrichtung. In manchen Ausführungsformen kann beispielsweise eine Bestimmung des Schärfegrads in einem lokalen Bereich von nur 0,005 mm in Umfangsrichtung erreicht werden. Je nach Wahl der optischen Abbildung können auch Schärfegrade in wesentlich kleineren Bereichen bestimmt werden. Wenn das Schneidmesser einen in Umfangsrichtung variablen Radius aufweist, also beispielsweise ein Sichelmesser ist, erfolgt vorteilhafterweise bei jedem Messpunkt eine Fokussierung. Bei Kreismessern sollte am Anfang des Ermittlungsvorgangs am ersten Messpunkt eine Grobfokussierung erfolgen, bei nachfolgenden Messpunkten ist eine Feinfokussierung ausreichend. Eine Grobfokussierung erfolgt vorteilhafterweise durch relatives Verfahren der Lichterfassungsvorrichtung bezüglich des Schneidmessers. Dafür kommt die Messvorrichtung in Form einer Lichtschranke zum Einsatz. Eine Feinfokussierung findet durch Einstellung des Objektivs 15 statt, aber auch die Grobfokussierung kann durch optische Einstellungen in der Lichterfassungsvorrichtung erfolgen.

Die Auswerteeinheit 17 kann einen Mittelwert bezüglich des Schärfegrads aus mehreren Messungen an mehreren Messpunkten der Schneide 2 bilden. In manchen Ausführungsformen ist es möglich, dass zunächst ein Referenzwert für den Schärfegrad der Schneide 2 gemessen wird, vorteilhafterweise in einem Bereich der Schneide 2, der beim Schneidvorgang nicht in das Lebensmittelprodukt eindringt, und somit nicht abgenutzt wird. Dies wäre beim Sichelmesser beispielsweise der Anfangs- und Endbereich der Schneide.

Wie in Figur 2 gesehen werden kann, liegt die optische Achse O in der Messergrundebene, bzw. Schneidenebene.

Die Auswerteeinheit 17 umfasst ein Bildauswertungssystem, das neben der Bestimmung des Schärfegrads auch zunächst die Position der Schneide erkennen kann. Dies ermöglicht eine Ausrichtung und Positionierung der Messerschärfegradermittlungsvorrichtung bezüglich des Schneidmessers 1, sowie eine Grobfokussierung.

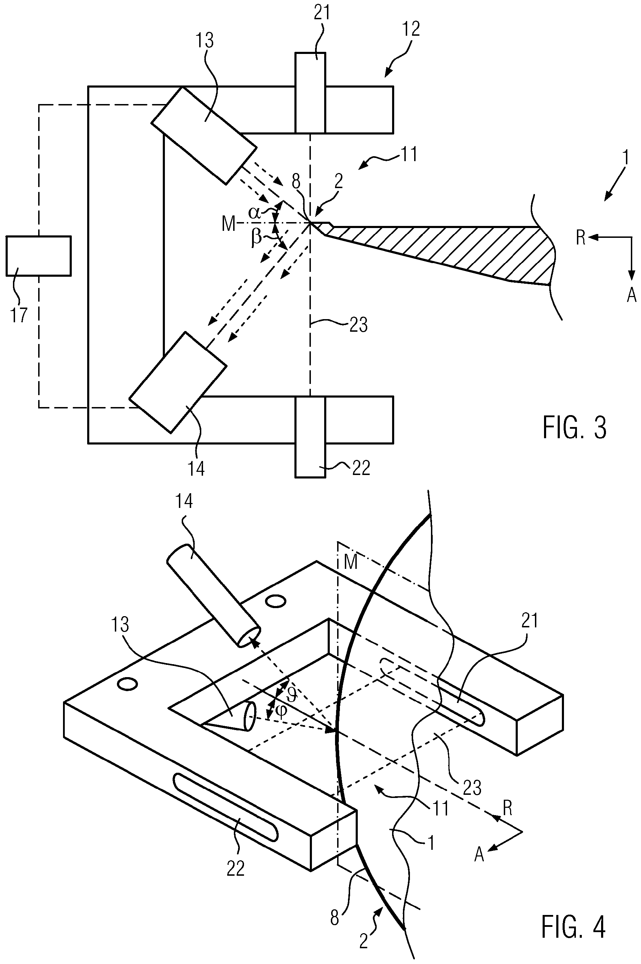

In Figur 3 ist eine erste Ausführungsform einer erfindungsgemäßen Messeschärfegradermittlungsvorrichtung 12 in schematischer Seitenansicht unter Angabe der Radialrichtung R und Axialrichtung A des Schneidmessers 1 dargestellt. In dieser Ausführungsform sind die Lichtquelle 13 und die Lichterfassungsvorrichtung 14 winklig bezüglich der Messerebene M angeordnet. Insbesondere ist die Lichtquelle 13 in einem Winkel α ausgehend von der Messerebene M auf der Rückseite des Schneidmessers 1 angeordnet und die Lichterfassungsvorrichtung 14 in einem Winkel β auf der Vorderseite des Schneidmessers 1. Der Winkel α ist insbesondere größer gleich dem Schneidenwinkel γ, sodass das Licht der Lichtquelle 13 nicht direkt auf den vorderen Schneidenbereich 7 trifft, sondern vornehmlich auf die Schneidkante 8. Insbesondere ist der Winkel α im Wesentlichen gleich dem Schneidwinkel γ. Der Winkel β ist bevorzugt größer als der Winkel a.

Die Lichtquelle 13 und die Lichterfassungsvorrichtung 14 sind im Wesentlichen gekoppelt, eine Ansteuerung und das Auslesen von Daten werden durch die Auswerteeinheit 17 durchgeführt. Insbesondere kann die Lichtquelle 13 durch eine Laserdiode gebildet werden. Die Lichtquelle 13 kann alternativ durch eine LED gebildet werden. Die Lichterfassungsvorrichtung 14 kann durch eine Fotodiode gebildet werden, die das Streulicht aufnimmt.

Alternativ kann die Lichterfassungsvorrichtung 14 aber auch ein Objektiv und eine Digitalkamera aufweisen.

Um eine relative Positionierung des Schneidmessers 1 und der Messerschärfegradermittlungsvorrichtung 12 zur ermöglichen, weist die Messerschärfegradermittlungsvorrichtung 12 erfindungsgemäß eine Gabellichtschranke 11 auf. Die Gabellichtschranke 11 weist einen Lichtschrankensender 21 und einem Lichtschrankenempfänger 22 auf, zwischen denen ein Lichtband 23 erzeugt wird. Das Signal der Lichtschranke 11 wird von der Auswerteeinheit 17 verarbeitet. Sobald die Schneidkante 8 in der Lichtschranke 11 angeordnet ist, kann dies durch die Auswerteeinheit 17 erfasst werden, und die relative Positionierung bzw. Grobfokussierung der Messerschärfegradermittlungsvorrichtung bezüglich der Schneide 2 wird gestoppt. In dieser Position ist die Lichtquelle 13 genau auf die Schneidkante 8 ausgerichtet. Die relative Positionierung kann bei verschiedenen Drehwinkeln des Schneidmessers 1 wiederholt werden, insbesondere wenn es sich um ein Sichelmesser handelt.

In Figur 4 ist eine zweite Ausführungsform einer erfindungsgemäßen Messerschärfegradermittlungsvorrichtung dargestellt. Die Ausführungsform von Figur 4 entspricht im Wesentlichen der Ausführungsform von Figur 3, wobei die Lichtquelle 13 in einem Winkel ϕ und die Lichterfassungseinrichtung 14 in einem Winkel ϑ bezüglich der durch die Radialrichtung R und Axialrichtung A im Messpunkt an der Schneide 2 des Schneidmessers 1 definierten Ebene angeordnet sind. D.h. die Lichtquelle 13 und die Lichterfassungsvorrichtung 14 sind nicht bezüglich der Messerebene M, wie in Figur 3 dargestellt, winklig angeordnet, sondern bezüglich einer dazu orthogonalen Ebene, in der auch das Lichtband 23 der Lichtschranke 11 liegt. Der Winkel ϕ und der Winkel ϑ sind insbesondere im Bereich von 10° bis 25°, in der vorliegenden Ausführungsform um die 17°. Dadurch können ungewollte Reflexionen an angewinkelten Messerflächen vermieden werden. Der Winkel ϕ des Sendestrahls bewirkt, dass der Überlappungsbereich der Messerschneide mit dem Strahl in Umfangsrichtung des Messers größer wird.

Vorteilhaftweise sind die Lichtquelle 13 und die Lichterfassungsvorrichtung 14 fest mit der Lichtschranke 21,22 verbunden.

Insbesondere wird die Messerschärfegradermittlungsvorrichtung mit einer Lebensmittelaufschneidemaschine oder Messerschleifmaschine kombiniert, wobei letztere vorteilhafterweise programmierbar sind. Somit kann durch den ermittelten Messerschärfegrad ein Eingangssignal für die Regelung des Aufschneide- bzw. Schleifbetriebes bereitgestellt werden.

Das mehrfache Nachschleifen von Schneidmessern bei Lebensmittelaufschneidemaschine ist üblich, und wird je nach aufzuschneidendem Produkt in unterschiedlichen Intervallen erforderlich. Es werden gemeinhin weitgehend automatisch arbeitende Messerschleifmaschinen (Schärfmaschinen) eingesetzt, die bevorzugt neben der Lebensmittelaufschneidemaschine vorgehalten werden, sodass ein Nachschleifen vor Ort erfolgen kann. Alternativ werden die Schneidmesser zurück an den Messer-Hersteller gesandt und dort geschliffen. Beim Schleifen wird in erster Linie die Schneide mitsamt Schneidwinkel wiederhergestellt.

Beim mehrfachen Nachschleifen kann es daher möglicherweise zu Problemen mit der Schnittqualität kommen, weil die Schneide allmählich von außen nach innen zurückversetzt wird, und sich die Schneidenlänge dabei vergrößert. Zu unnötigen Messerverschleiß kann es insbesondere kommen, wenn das Nachschleifen des Messers eventuell zu früh veranlasst wird, beispielsweise aufgrund einer visuellen oder manuellen Beurteilung durch eine Bedienperson.

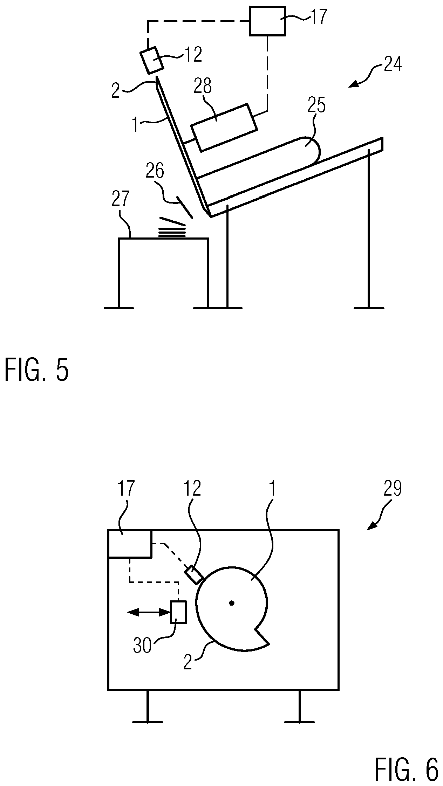

In Figur 5 ist der Einsatz einer erfindungsgemäßen Messerschärfegradermittlungsvorrichtung 12 in einer erfindungsgemäßen Ausführungsform einer Lebensmittelaufschneidemaschine 24 dargestellt. In der Lebensmittelaufschneidemaschine wird ein Lebensmittelprodukt 25 einem rotierenden Schneidmesser 1 durch einen Vorschubantrieb zugeführt, sodass einzelne Scheiben abgeschnitten werden und auf einer Ablage 27 als Portioniereinrichtung abgelegt werden. Die Rotation des Schneidmessers 1 wird durch einen Schneidmessermotor 28 bewirkt. Das Schneidmesser 1 ist auf einem Schneidkopf montiert, der vom Schneidmessermotor 28 angetrieben wird. Die Messerschärfegradermittlungsvorrichtung 12 ist an einer Position des Umfangs des Schneidmessers 1 vorgesehen und auf die Schneide 2 ausgerichtet. Die Messerschärfegradermittlungsvorrichtung 12 kann insbesondere in Radialrichtung des Schneidmessers 1 verfahrbar angeordnet sein, sodass sie auch bei Messern mit veränderlichem Radius, zum Beispiel Sichelmessern, immer an geeigneter Stelle für die Ermittlung des Schärfegrads angeordnet werden kann. Während des Aufschneidebetriebs kann die Messerschärfegradermittlungsvorrichtung 12 vom Schneidmesser 1 weggefahren werden, oder abgedeckt werden, sodass sie nicht verschmutzt oder beschädigt wird.

Die Auswertevorrichtung 17 der Messerschärfegradermittlungsvorrichtung 12 kann insbesondere in Kommunikationsverbindung mit der Steuervorrichtung der Lebensmittelaufschneidemaschine 24 sein, oder Teil der Steuervorrichtung der Lebensmittelaufschneidemaschine 24 sein. Somit kann der ermittelte Schärfegrad Eingang in die Regelung der Betriebsparameter der Lebensmittelaufschneidemaschine 24, beispielsweise der Drehgeschwindigkeit des Schneidmessers 1 oder der Geschwindigkeit des Vorschubs, finden.

Insbesondere kann die Ermittlung des Schärfegrads des Schneidmessers 1 in der Beladungspause der Lebensmittelaufschneidemaschine 24 erfolgen.

Vorteilhafterweise wird die Änderung des Schärfegrads über die Zeit gespeichert, wodurch die verbleibende Einsatzzeit des Schneidmessers 1 vorausberechnet werden kann. Die verbleibende Einsatzzeit kann als Eingangsparameter in die Regelung der Lebensmittelaufschneidemaschine 24 eingehen, und/oder einer Bedienperson angezeigt werden. Durch die Erfindung wird somit eine optimale Schleifzeitpunkt-Bestimmung ermöglicht. Der Schleifzeitpunkt ist von den Parametern und Umgebungsbedingungen des Schneidprozesses abhängig. Insbesondere ist die Abnutzung vom Schneidenwinkel, dem eingestellten Schneidspalt, dem Produkt und/oder von einem möglichen Interleaver-Einsatz abhängig. Durch die Vorausberechnung des Schleifzeitpunkts kann der Messerwechsel so gelegt werden, dass er nicht zu früh ist, und vorteilhafterweise mit einer Produktionsunterbrechung, zum Beispiel beim Produkt- oder Chargenwechsel, zusammenfällt.

In einer Ausführungsform kann die Ermittlung des Schärfegrads des Schneidmessers initial nach dem Montieren des Schneidmessers 1 in der Lebensmittelaufschneidemaschine 24 erfolgen. Somit kann festgestellt werden, ob ein neu montiertes Schneidmesser 1 den benötigten Schärfegrad aufweist. Somit kann die Bedienperson bei der Vorhersage unterstützt werden, wie lange ein Schneidmesser 1 qualitätssicher, d.h. mit den gewünschten Schneideigenschaften, benutzt werden kann.

In Figur 6 ist der Einsatz einer erfindungsgemäßen Messerschärfegradermittlungsvorrichtung 12 in einer erfindungsgemäßen Ausführungsform einer Messerschleifmaschine 29 dargestellt. Das Schneidmesser 1 ist auf einer drehbaren Messeraufnahme in der Messerschleifmaschine 29 montiert. Die Messerschleifmaschine 29 weist einen Schleifkopf 30 auf, der zumindest in Radialrichtung des Schneidmessers 1 verstellbar ist, und mit der Schneide 2 beim Schleifen des Schneidmessers 1 in Kontakt gebracht wird. Insbesondere wird das Schneidmesser 1 beim Schleifvorgang langsam um seine Drehachse gedreht, bis die gesamte Schneide 2 geschliffen wurde. Die Messerschärfegradermittlungsvorrichtung 12 ist an einer Position des Umfangs des Schneidmessers 1 vorgesehen und auf die Schneide 2 ausgerichtet. Die Messerschärfegradermittlungsvorrichtung 12 kann insbesondere in Radialrichtung des Schneidmessers 1 verfahrbar angeordnet sein, sodass sie auch bei Messern mit veränderlichem Radius, zum Beispiel Sichelmessern, immer an geeigneter Stelle für die Ermittlung des Schärfegrads angeordnet werden kann. Während des Schleifvorgangs kann die Messerschärfegradermittlungsvorrichtung 12 vom Schneidmesser 1 weggefahren und/oder abgedeckt werden, sodass sie nicht verschmutzt oder beschädigt wird.

Die Auswertevorrichtung 17 der Messerschärfegradermittlungsvorrichtung 12 kann insbesondere in Kommunikationsverbindung mit der Steuervorrichtung der Messerschleifmaschine 29 sein, oder Teil der Steuervorrichtung der Messerschleifmaschine 29 sein. Somit kann der ermittelte Schärfegrad Eingang in die Regelung der Betriebsparameter der Messerschleifmaschine 29 finden. Insbesondere kann festgestellt werden, wann der gewünschte Schärfegrad erreicht ist, sodass der Schleifvorgang beendet werden kann.

Bei der Messerschleifmaschine kann die Ermittlung des Schärfegrads nach erfolgter Durchführung einer Schleifroutine erfolgen. Der Schärfegrad kann punktuell an vorbestimmten Messpunkten oder kontinuierlich entlang zumindest eines Bereichs der Schneide ermittelt werden, während das Schneidmesser langsam rotiert. Der Einsatz der Messerschärfegradermittlungsvorrichtung bei einer Messerschleifmaschine ermöglicht eine Automatisierung des ansonsten semi-manuellen Schleifvorgangs, was eine Minimierung der Fehlbedienung und eine längere Einsatz- und Lebensdauer des Schneidmessers ermöglicht. Ein zielgerichtetes Schleifen kann stattfinden, weil der aktuelle Zustand des Schneidmessers initial genau erfasst wird, und ergänzend auch während des Schleifens nachkontrolliert werden kann. Durch die erfindungsgemäße Messerschärfegradermittlungsvorrichtung wird der Verschleiß von Schneidmessern minimiert, da das Schleifen des Schneidmessers zu einem optimalen Zeitpunkt erfolgen kann, und beim Schleifvorgang genau bestimmt werden kann, wann der gewünschte Schärfegrad erreicht wurde. Fehler durch Fehlbedienung, insbesondere in Form von zu frühzeitigen Schleifen oder von zu vielen Schleifvorgängen, werden somit vermieden. Bislang wurde oft nur auf Basis von Erfahrungswerten oder einfacher visueller oder manueller Kontrolle bestimmt, wann ein Nachschleifen notwendig ist, was oft zu einem zu frühen Nachschleifen führt.

Erfindungsgemäß kann auch die Verletzungsgefahr reduziert werden, da manuelle Schärfeprüfungen entfallen.

Die Messerschärfegradermittlungsvorrichtung und das Verfahren zum Bestimmen des Schärfegrads können nicht nur bei Messern mit glatter Schneidkante, sondern auch bei Wellenschliff- und Sägezahn-Messern zum Einsatz kommen. Vorteilhaftweise, wird dann aber immer ein vorbestimmter Messpunkt in der Schneidenstruktur oder mehrere vorbestimmte Messpunkte in der Schneidenstruktur vermessen. Beispielweise kann immer ein erhabener Teil der Schneide vermessen werden.

## Patentansprüche

1. Vorrichtung (12) zur Ermittlung des Schärfegrads einer Schneide (2) eines Schneidmessers (1) einer Lebensmittelaufschneidemaschine (24), insbesondere eines Kreis- oder Sichelmessers, mit
einer Lichtquelle (13),
einer Lichterfassungsvorrichtung (14), die ausgelegt ist, an der Schneidmesserschneide (2) reflektiertes Licht der Lichtquelle (13) zu erfassen, und
einer Auswerteeinheit (17), die ausgelegt ist, aus dem Signal der Lichterfassungsvorrichtung (14) den Schärfegrad des Schneidmessers (1) zu ermitteln,
**gekennzeichnet durch**
eine Messvorrichtung in Form einer Lichtschranke (11), mit der die Position der Schneide (2) des Schneidmessers (1) bezüglich der Messerschärfegradermittlungsvorrichtung (12) in radialer Richtung des Schneidmessers (1) bestimmbar ist.

2. Vorrichtung gemäß Anspruch 1, wobei die Lichtquelle (13) eine Ringlichtquelle ist, die insbesondere koaxial bezüglich der Lichterfassungsvorrichtung (14). angeordnet ist.

3. Vorrichtung gemäß Anspruch 1 oder 2, wobei die Lichterfassungseinrichtung (14) durch eine Digitalkamera (16) mit Objektiv (15) gebildet wird, wobei das Objektiv (15) vorteilhafterweise in einem Abstand von 2 Zentimetern bis 10 Zentimetern von der Schneide (2) angeordnet ist.

4. Vorrichtung gemäß Anspruch 3, wobei das Objektiv (15) telezentrisch ist.

5. Vorrichtung gemäß einem der vorangehenden Ansprüche, wobei die Lichterfassungseinrichtung (14) nur Licht mit einer bestimmten Wellenlänge oder in einem bestimmten Wellenlängenbereich erfasst.

6. Vorrichtung gemäß einem der vorangehenden Ansprüche, wobei mit der Messvorrichtung die Position der Schneide (2) des Schneidmessers (1) bezüglich der Messerschärfegradermittlungsvorrichtung (12) in axialer und radialer Richtung bestimmt werden kann.

7. Vorrichtung gemäß einem der vorangehenden Ansprüche, wobei die Lichtquelle (13) einen beweglichen Spiegel aufweist oder mit einem beweglichen Spiegel korrespondiert, um die Richtung des ausgestrahlten Lichts vorzugeben.

8. Vorrichtung gemäß einem der vorangehenden Ansprüche, wobei die Lichtquelle (13) in einem ersten Winkel α und die Lichterfassungseinrichtung (14) in einem zweiten Winkel β zur Messerebene (11) des Schneidmessers (1) angeordnet sind.

9. Vorrichtung gemäß einem der vorangehenden Ansprüche, wobei die Lichtquelle (13) in einem dritten Winkel ϕ und die Lichterfassungseinrichtung in einem vierten Winkel ϑ bezüglich der durch die Radialrichtung und Axialrichtung im Messpunkt an der Schneide (2) des Schneidmessers (1) definierten Ebene angeordnet sind.

10. Lebensmittelaufschneidemaschine (24), umfassend eine Messerschärfegradermittlungsvorrichtung (12) gemäß einem der vorangehenden Ansprüche und ein Schneidmesser (1), wobei die Messerschärfegradermittlungsvorrichtung (12) so angeordnet ist, dass der Schärfegrad des Schneidmessers (1) erfasst werden kann, während dieses auf einem Schneidkopf der Lebensmittelaufschneidemaschine (24) montiert ist.

11. Lebensmittelaufschneidemaschine gemäß Anspruch 10, weitergehend umfassend eine Messerschleifeinrichtung, die ausgelegt ist, das in der Lebensmittelaufschneidemaschine (24) montierte Schneidmesser (1) nachzuschleifen, insbesondere unter Auswertung des von der Messerschärfegradermittlungsvorrichtung (12) ermittelten Schärfegrads des Schneidmessers (1).

12. Messerschleifmaschine (29) umfassend eine Messerschärfegradermittlungsvorrichtung (12) gemäß einem der vorangehenden Ansprüche 1 bis 9, wobei die Messerschärfegradermittlungsvorrichtung (12) so angeordnet ist, dass der Schärfegrad eines Schneidmessers (1) erfasst werden kann, während dieses an einer Messeraufnahme in der Messerschleifmaschine (29) montiert ist.

13. Messerschleifmaschine nach Anspruch 12, die ausgelegt ist, auf der Basis des von der Messerschärfegradermittlungsvorrichtung (12) ermittelten Schärfegrads den Schleifvorgang zu steuern.

14. Lebensmittelaufschneidemaschine oder Messerschleifmaschine nach einem der Ansprüche 10 bis 13, wobei die Messerschärfegradermittlungsvorrichtung (12) bezüglich des Schneidmessers (1) in ihrer Position und/oder Ausrichtung verstellbar ist.

15. Lebensmittelaufschneidemaschine oder Messerschleifmaschine nach einem der Ansprüche 10 bis 14, die ausgelegt ist, den Schärfegrad in Abhängigkeit eines Drehwinkels zu bestimmen, indem das Schneidmesser (1) und die Messerschärfegradermittlungsvorrichtung (12) relativ zueinander um die Rotationsachse des Schneidmessers verdreht werden.

16. Verfahren zur Ermittlung des Schärfegrads einer Schneide (2) eines Schneidmessers (1) einer Lebensmittelaufschneidemaschine (24), insbesondere eines Kreis- oder Sichelmessers, umfassend die Schritte:
- Bestimmung der Position der Schneide (2) des Schneidmessers (1) bezüglich der Messerschärfegradermittlungsvorrichtung (12) in radialer Richtung des Schneidmessers (1) mit einer Messvorrichtung in Form einer Lichtschranke (11),
- Ausstrahlen von Licht auf die Schneide (2),
- Messen einer Reflexion des Lichts, und
- Auswerten der Messung der Reflexion und Ermitteln des Schärfegrads der Schneide (2) daraus.

17. Verfahren nach Anspruch 16, wobei der ermittelte Schärfegrad als Eingangssignal der Steuerung eines Schleifvorganges des Schneidmessers (1) verwendet wird.

18. Verfahren nach Anspruch 16 oder 17, wobei durch das Ausstrahlen von Licht und das Messen der Reflexion die Verzahnungsart und/oder die Verzahnungsteilung des Schneidmessers (1) bestimmt wird.

19. Verfahren nach einem der Ansprüche 16 bis 18, wobei durch das Ausstrahlen von Licht und das Messen der Reflexion der Schneidenwinkel auf einer oder beiden Seiten des Schneidmessers (1) bestimmt wird.

20. Verfahren nach einem der Ansprüche 16 bis 19, wobei durch das Ausstrahlen von Licht und das Messen der Reflexion Beschädigungen, beispielsweise Ausbrüche, in der Schneide (2) bestimmt werden, insbesondere deren Abmessungen in Lauf- bzw. Umfangsrichtung des Schneidmessers (1) und deren Tiefe in radialer Richtung des Schneidmessers (1).

## Claims

1. Device (12) for determining the sharpness level of a blade (2) of a cutting knife (1) of a food slicing machine (24), in particular a circular or sickle knife, comprising
a light source (13),
a light detecting device (14) configured to detect light of the light source (13) reflected at the cutting knife blade (2), and
an evaluation unit (17) configured to determine the sharpness level of the cutting knife (1) from the signal of the light detecting device (14),
**characterized by**
a measuring device in the form of a light barrier (11), with which it is possible to determine the position of the blade (2) of the cutting knife (1) with respect to the knife sharpness level determining device (12) in radial direction of the cutting knife (1).

2. Device according to claim 1, wherein the light source (13) is a ring light source arranged in particular coaxially with respect to the light detecting device (14).

3. Device (14) according to claim 1 or 2, wherein the light detecting device (14) is formed by a digital camera (16) having a lens (15), the lens (15) being advantageously arranged at a distance of 2 centimeters to 10 centimeters from the blade (2).

4. Device according to claim 3, wherein the lens (15) is telecentric.

5. Device according to any one of the preceding claims, wherein the light detecting device (14) only detects light having a specific wavelength or in a specific wavelength range.

6. Device according to any one of the preceding claims, wherein it is possible with the measuring device to determine the position of the blade (2) of the cutting knife (1) with respect to the knife sharpness level determining device (12) in axial and radial direction.

7. Device according to any one of the preceding claims, wherein the light source (13) comprises a movable mirror or corresponds to a movable mirror to predetermine the direction of the emitted light.

8. Device according to any one of the preceding claims, wherein the light source (13) is arranged at a first angle α and the light detecting device (14) at a second angle β with respect to the knife plane (11) of the cutting knife (1).

9. Device according to any one of the preceding claims, wherein the light source (13) is arranged at a third angle ϕ and the light detecting device at a fourth angle ϑ with respect to the plane defined by the radial direction and axial direction at the measuring point on the blade (2) of the cutting knife (1).

10. Food slicing machine (24) comprising a knife sharpness level determining device (12) according to any one of the preceding claims and a cutting knife (1), wherein the knife sharpness level determining device (12) is arranged such that the sharpness level of the cutting knife (1) can be detected while it is mounted on a cutting head of the food slicing machine (24).

11. Food slicing machine according to claim 10, further comprising a knife grinding device designed to regrind the cutting knife (1) mounted in the food slicing machine (24), in particular by evaluating the sharpness level of the cutting knife (1) as determined by the knife sharpness level determining device (12).

12. Knife grinding machine (29) comprising a knife sharpness level determining device (12) according to any one of the preceding claims 1 to 9, wherein the knife sharpness level determining device (12) is arranged such that the sharpness level of a cutting knife (1) can be detected while it is mounted on a knife holder in the knife grinding machine (29).

13. Knife grinding machine according to claim 12, which is configured to control the grinding operation on the basis of the sharpness level determined by the knife sharpness level determining device (12).

14. Food slicing machine or knife grinding machine according to any one of claims 10 to 13, wherein the knife sharpness level determining device (12) is adjustable in position and/or orientation with respect to the cutting knife (1).

15. Food slicing machine or knife grinding machine according to any one of claims 10 to 14, which is configured to determine the sharpness level as a function of a rotation angle by rotating the cutting knife (1) and the knife sharpness level determining device (12) relative to each other about the axis of rotation of the cutting knife.

16. Method for determining the sharpness level of a blade (2) of a cutting knife (1) of a food slicing machine (24), in particular a circular or sickle knife, comprising the steps:
- determining the position of the blade (2) of the cutting knife (1) with respect to the knife sharpness level determining device (12) in radial direction of the cutting knife (1) with a measuring device in the form of a light barrier (2),
- emitting light onto the blade (2),
- measuring a reflection of light, and
- evaluating the measurement of the reflection and determining the sharpness level of the blade (2) therefrom.

17. Method according to claim 16, wherein the determined sharpness level is used as an input signal for controlling a grinding operation of the cutting knife (1).

18. Method according to claim 16 or 17, wherein the type of toothing and/or the toothing pitch of the cutting knife (1) is determined by emitting light and measuring the reflection.

19. Method according to any one of claims 16 to 18, wherein the cutting angle on one or both sides of the cutting knife (1) is determined by emitting light and measuring the reflection.

20. Method according to any one of claims 16 to 19, wherein damage, for example break-outs, in the blade (2) are determined by emitting light and measuring the reflection, in particular their dimensions in the running or circumferential direction of the cutting knife (1) and their depth in the radial direction of the cutting knife (1).

## Revendications

1. Dispositif (12) pour déterminer le degré d'affûtage d'un tranchant de coupe (2) d'une lame de coupe (1) d'une trancheuse de produits alimentaires (24), notamment d'une lame de coupe circulaire ou d'une lame de coupe en faucille, comprenant
une source de lumière (13),
un dispositif de détection de lumière (14), qui est conçu pour détecter de la lumière de la source de lumière (13) ayant été réfléchie au niveau du tranchant de coupe (2) de la lame de coupe, et
une unité de traitement de données (17), qui est conçue pour déterminer le degré d'affûtage de la lame de coupe (1) à partir du signal du dispositif de détection de lumière (14),
**caractérisé par**
un dispositif de mesure sous la forme d'une barrière photoélectrique (11), à l'aide duquel il est possible de déterminer la position du tranchant de coupe (2) de la lame de coupe (1) par rapport au dispositif de détermination du degré d'affûtage de lame (12), dans la direction radiale de la lame de coupe (1).

2. Dispositif selon la revendication 1, dans lequel la source de lumière (13) est une source de lumière annulaire, qui est notamment agencée de manière coaxiale par rapport au dispositif de détection de lumière (14).

3. Dispositif selon la revendication 1 ou la revendication 2, dans lequel le dispositif de détection de lumière (14) est formé par une caméra numérique (16) avec un objectif (15), l'objectif (15) étant avantageusement agencé à une distance de 2 centimètres à 10 centimètres du tranchant de coupe (2).

4. Dispositif selon la revendication 3, dans lequel l'objectif (15) est télécentrique.

5. Dispositif selon l'une des revendications précédentes, dans lequel le dispositif de détection de lumière (14) ne détecte que de la lumière d'une longueur d'onde déterminée ou dans une plage déterminée de longueur d'onde.

6. Dispositif selon l'une des revendications précédentes, dans lequel le dispositif de mesure permet de déterminer la position du tranchant de coupe (2) de la lame de coupe (1) par rapport au dispositif de détermination du degré d'affûtage de lame (12), dans la direction axiale et radiale.

7. Dispositif selon l'une des revendications précédentes, dans lequel la source de lumière (13) comprend un miroir mobile ou coopère avec un miroir mobile, en vue de prédéfinir la direction de la lumière émise.

8. Dispositif selon l'une des revendications précédentes, dans lequel la source de lumière (13) est agencée selon un premier angle α et le dispositif de détection de lumière (14) est agencé selon un deuxième angle β par rapport au plan de lame de coupe (11) de la lame de coupe (1).

9. Dispositif selon l'une des revendications précédentes, dans lequel la source de lumière (13) est agencée selon un troisième angle ϕ et le dispositif de détection de lumière est agencé selon un quatrième angle ϑ par rapport au plan défini par la direction radiale et la direction axiale au niveau du point de mesure sur le tranchant de coupe (2) de la lame de coupe (1).

10. Trancheuse de produits alimentaires (24), comprenant un dispositif de détermination du degré d'affûtage de lame (12) selon l'une des revendications précédentes, et une lame de coupe (1), le dispositif de détermination du degré d'affûtage de lame (12) étant agencé de manière telle, que le degré d'affûtage de la lame de coupe (1) puisse être détecté pendant qu'elle est montée sur une tête de coupe de la trancheuse de produits alimentaires (24).

11. Trancheuse de produits alimentaires selon la revendication 10, comprenant, par ailleurs, un dispositif d'affûtage de lame de coupe, qui est conçu pour assurer le réaffûtage de la lame de coupe (1) montée dans la trancheuse de produits alimentaires (24), notamment en exploitant le degré d'affûtage de la lame de coupe (1), qui a été déterminé par le dispositif de détermination du degré d'affûtage de lame (12).

12. Machine d'affûtage de lame de coupe (29) comprenant un dispositif de détermination du degré d'affûtage de lame (12) selon l'une des revendications précédentes 1 à 9, le dispositif de détermination du degré d'affûtage de lame (12) étant agencé de manière à pouvoir détecter le degré d'affûtage d'une lame de coupe (1) pendant qu'elle est montée sur un support de lame dans la machine d'affûtage de lame de coupe (29).

13. Machine d'affûtage de lame de coupe selon la revendication 12, qui est conçue pour commander l'opération d'affûtage, sur la base du degré d'affûtage déterminé par le dispositif de détermination du degré d'affûtage de lame (12).

14. Trancheuse de produits alimentaires ou machine d'affûtage de lame de coupe selon l'une des revendications 10 à 13, dans lesquelles le dispositif de détermination du degré d'affûtage de lame (12) est réglable quant à sa position et/ou son orientation par rapport à la lame de coupe (1).

15. Trancheuse de produits alimentaires ou machine d'affûtage de lame de coupe selon l'une des revendications 10 à 14, qui sont conçues pour déterminer le degré d'affûtage en fonction d'un angle de rotation, par le fait que la lame de coupe (1) et le dispositif de détermination du degré d'affûtage de lame (12) sont tournés relativement l'un par rapport à l'autre autour de l'axe de rotation de la lame de coupe.

16. Procédé pour déterminer le degré d'affûtage d'un tranchant de coupe (2) d'une lame de coupe (1) d'une trancheuse de produits alimentaires (24), notamment d'une lame de coupe circulaire ou d'une lame de coupe en faucille, comprenant les étapes suivantes :
- la détermination de la position du tranchant de coupe (2) de la lame de coupe (1) par rapport au dispositif de détermination du degré d'affûtage de lame (12), dans la direction radiale de la lame de coupe (1), à l'aide d'un dispositif de mesure sous la forme d'une barrière photoélectrique (11),
- l'émission de lumière sur le tranchant de coupe (2),
- la mesure d'une réflexion de la lumière, et
- le traitement de données de la mesure de la réflexion et, à partir de là, la détermination du degré d'affûtage du tranchant de coupe (2).

17. Procédé selon la revendication 16, d'après lequel le degré d'affûtage déterminé, est utilisé en tant que signal d'entrée de la commande d'une opération d'affûtage de la lame de coupe (1).

18. Procédé selon la revendication 16 ou la revendication 17, d'après lequel, grâce à l'émission de lumière et à la mesure de la réflexion, on détermine le type de dentelure et/ou le pas de dentelure de la lame de coupe (1).

19. Procédé selon l'une des revendications 16 à 18, d'après lequel, grâce à l'émission de lumière et à la mesure de la réflexion, on détermine l'angle de coupe sur l'un ou les deux côtés de la lame de coupe (1).

20. Procédé selon l'une des revendications 16 à 19, d'après lequel, grâce à l'émission de lumière et à la mesure de la réflexion, on détermine des dommages, comme par exemple des brèches, sur le tranchant de coupe (2), notamment leurs dimensions dans la direction de marche ou direction périphérique de la lame de coupe (1), et leur profondeur dans la direction radiale de la lame de coupe (1) .
